Europäisches Patentamt

European Patent Office

Office européen des brevets

(19)

(11) Veröffentlichungsnummer : **0 483 598 B1**

(12) # EUROPÄISCHE PATENTSCHRIFT

(45) Veröffentlichungstag der Patentschrift :
06.04.94 Patentblatt 94/14

(51) Int. Cl.⁵ : **C01G 19/02, C25B 1/00, C09D 5/24, H01B 1/08**

(21) Anmeldenummer : **91117628.7**

(22) Anmeldetag : **16.10.91**

(54) **Verfahren zur Herstellung von feinteiligem, elektrisch leitfähigem Zinn-IV-Oxid.**

(30) Priorität : **29.10.90 DE 4034353**

(43) Veröffentlichungstag der Anmeldung :
06.05.92 Patentblatt 92/19

(45) Bekanntmachung des Hinweises auf die
Patenterteilung :
06.04.94 Patentblatt 94/14

(84) Benannte Vertragsstaaten :
**AT BE CH DE ES FR GB IT LI NL SE**

(56) Entgegenhaltungen :
**EP-A- 0 302 738**
**EP-A- 0 371 927**

(73) Patentinhaber : **Th. Goldschmidt AG**
**Goldschmidtstrasse 100**
**D-45127 Essen (DE)**

(72) Erfinder : **Giersberg, Joachim**
**Zur Höhe 18**
**W-5370 Marl-Sinsen (DE)**
Erfinder : **Naumann, Dirk, Dr.**
**Asbachtal 1**
**W-4300 Essen-Kupferdreh (DE)**
Erfinder : **Honselmann, Frank**
**Hellweg 3**
**W-4352 Herten (DE)**

**Beschreibung**

Die Erfindung betrifft ein Verfahren zur Herstellung von feinteiligem, elektrisch leitfähigem Zinn-IV-Oxid, wobei in einer ersten Stufe eine wäßrige Lösung von Zinn-IV-Oxalat und/oder Oxalaten polymerer Zinn-IV-Verbindungen hergestellt wird, aus der in einer zweiten Stufe das gewünschte Zinn-IV-Oxid gewonnen wird.

Es ist seit langem bekannt, elektrisch leitfähige und infrarotreflektierende Zinnoxidschichten auf Substrate, insbesondere auf Glas, aufzubringen. Vielfach erfolgt die Herstellung solcher auf Glas aufgebrachten elektrisch leitfähigen und infrarotreflektierenden Zinnoxidschichten durch pyrolytische Zersetzung von flüssigen Zubereitungen, die im wesentlichen eine oder mehrere Basis-Zinnverbindungen und eine oder mehrere geeignete fluoridhaltige Dotierungsverbindungen enthalten.

Die elektrische Leitfähigkeit wird durch Fehlstellen in den jeweiligen Zinnoxidschichten erzeugt, wobei solche Fehlstellen zum größten Teil durch die zugesetzten Dotierungsmittel gebildet werden. Hierbei werden nur wenig unterhalb des Leitungsbandes Störstellenterme resp. Donatorterme erzeugt, aus denen gegebenenfalls unter geringem Energieaufwand Elektronen in das Leitungsband gebracht werden können. Dies ist bei reinem, undotiertem Zinnoxid aufgrund der zwischen Valenzband und Leitungsband vorhandenen verbotenen Zone nicht der Fall.

Im Hinblick auf die elektrische Leitfähigkeit bzw. einer antistatischen Einstellung von verschiedenen festen und flüssigen technischen Produkten, wie z. B. von Kunststoffen, Lacken und Farben, Papieren, Tonern und Textilien, werden elektrisch leitfähige Pigmente benötigt. Neben Metallpulvern und Graphit, die zwangsläufig eine dunkle Einfärbung solcher technischer Produkte nach sich ziehen, werden vielfach pulverförmige Halbleiter eingesetzt. Hierbei ist es wünschenswert, möglichst weiße bis hellfarbene, feinkörnige Halbleiterpigmente mit hoher elektrischer Leitfähigkeit bzw. geringem spezifischen Widerstand einsetzen zu können.

In der EP-A-0 235 968 ist eine transparente, wäßrige, eine Zinnverbindung enthaltende Lösung beschrieben, die durch Umsetzung von Zinncarboxylat, insbesondere Zinnoxalat, mit Wasserstoffperoxid im Verhältnis 1 : 1,5 oder darüber in wäßrigem Medium erhalten wird. Dabei kann in dem Reaktionssystem ein Dotierungsmittel in einer Menge von 0,01 bis 0,35 Mol je Mol Zinncarboxylat enthalten sein. Diese transparente wäßrige Lösung kann dann bei einer Temperatur oberhalb 400°C calciniert werden.

Dieses Verfahren kann aber noch nicht in jeder Hinsicht befriedigen. Das als Ausgangsprodukt vorzugsweise dienende Zinn-II-Oxalat muß zunächst aus metallischem Zinn oder einer Zinn-II-Verbindung hergestellt werden. Zinn-II-Oxalat ist in Wasser schwerlöslich, so daß die Oxidation mit $H_2O_2$ in wäßrigem Medium in heterogener Phase abläuft. Darüber hinaus ist das bei der Calcination bei Temperaturen von über 400°C erhaltene Zinn-IV-Oxid zum erheblichen Teil kristallin, während aus anwendungstechnischen Gründen amorphe Oxidpulver erwünscht sind.

Der vorliegenden Erfindung liegt das technische Problem zugrunde, ein Verfahren zu finden, welches in einem Verfahrensschritt von metallischem Zinn direkt zu Zinn-IV-Oxalat und/oder Oxalaten polymerer Zinn-IV-Verbindungen enthaltenden wäßrigen Lösungen führt. Dabei soll nach der Calcinationsstufe vorwiegend feinteiliges, amorphes Zinn-IV-Oxid erhalten werden, welches die gewünschte Leitfähigkeit, das gewünschte Stampf- und Schüttvolumen und andere anwendungstechnisch wichtige Eigenschaften, wie z. B. helle Farbe, aufweist.

Dies gelingt erfindungsgemäß bei einem Verfahren der eingangs genannten Art, bei dem in der ersten Stufe das Zinn-IV-Oxalat und/oder die Oxalate polymerer Zinn-IV-Verbindungen durch Elektrolyse in Form ihrer wäßrigen Lösung erhalten werden, wobei

a) die Anode aus Zinn oder einer Zinnlegierung, welche ein Dotierungsmetall enthält, besteht,
b) die Kathode aus einem Metall oder Graphit besteht,
c) beide Elektroden durch ein Diaphragma oder eine $H^+$-Ionen durchlässige organische Membran voneinander getrennt sind, und
d) als Elektrolyt eine wäßrige Oxalsäurelösung verwendet wird,

und wobei man in der zweiten Stufe aus der erhaltenen Lösung des Zinn-IV-Oxalates und/oder der Oxalate polymerer Zinn-IV-Verbindungen, der an sich bekannte Dotierungsmittel in üblichen Mengen zugesetzt werden, das Zinn-IV-Oxid durch Calcinieren des Oxalates herstellt.

Es ist überraschend, daß bei der Elektrolyse an der Anode Zinn-IV-Ionen gebildet werden, da in der Regel in saurer Lösung Zinn nur zur zweiwertigen Stufe oxidiert wird. Dies kann möglicherweise durch eine Passivierung der Anode durch schwerlösliches Zinn-II-Oxalat bedingt sein, wobei sich als Folge der Passivierung an der Anode Sauerstoff entwickelt, der die Zinn-II-Ionen zu Zinn-IV-Ionen aufoxidiert.

Vorzugsweise wird als Elektrolyt eine gesättigte wäßrige Oxalsäurelösung verwendet, in der überschüssige, ungelöste Oxalsäure enthalten ist. Arbeitet man hingegen mit einer Oxalsäurelösung, die im Lauf der Elektrolyse an Oxalsäure verarmt, besteht die Möglichkeit der Bildung basischer Zinn-IV-Oxalate, deren Struktur vereinfachend durch die Formel $(OH)_2Sn(C_2O_4)$ wiedergegeben werden kann.

2

Bei Fortführung der Elektrolyse ohne weitere Oxalsäure-Zugabe wurde überraschenderweise gefunden, daß der Zinngehalt weiter zunimmt. So ist es möglich, hochzinnhaltige, oxalsaure, wäßrige Lösungen herzustellen, wobei Lösungen von > 400 g/l gelöstem Zinn bei einem Oxalsäure-Gehalt von < 50 g/l erhalten werden können. Es wird vermutet, daß es sich hierbei um die Oxalate polymerer Zinn-IV-Verbindungen handelt. Durch chemische Oxidation, etwa durch Oxidation mit Wasserstoffperoxid, wie sie in der EP-A-0 235 968 beschrieben ist, sind solche Lösungen nicht herstellbar.

Anoden- und Kathodenraum sind voneinander stromleitend zu trennen. Dabei soll der Ladungsaustausch durch H$^+$-Ionen unter Verwendung von keramischen Diaphragmen oder organischen Membranen gewährleistet, der Übertritt von Zinnionen in den Kathodenraum aber verhindert werden.

Als Diaphragmen verwendet man vorzugsweise anorganische, oberhalb 1000°C dichtgesinterte Diaphragmen einer Stärke von 6 bis 10 mm oder organische Diaphragmen einer Stärke von vorzugsweise 0,1 bis 1,0 mm.

Als organische Membranen sind Ionenaustauschermembranen einer Stärke von 0,1 bis 1,0 mm bevorzugt. Die Membranen bestehen dabei aus einem organischen Polymeren oder einem Stützgewebe mit Ionenaustauscherharzen, welche ionische Gruppen aufweisen. Derartige Membranen sind im Handel z. B. unter der Bezeichnung Nafion erhältlich.

Als Anodenmaterial ist metallisches Zinn oder eine Zinnlegierung zu verwenden, wobei die Legierung das Dotierungsmetall in der für die Dotierung des Zinnoxids gewünschten Menge enthalten kann. Ein geeignetes Legierungsmetall ist Antimon, dessen Brauchbarkeit zur Dotierung von Zinnoxiden aus dem Stand der Technik bekannt ist.

Als Kathodenmaterial kann jede Art von inerten Elektroden verwendet werden. Vorzugsweise werden Elektroden mit einer geringen Wasserstoffüberspannung, wie z. B. Edelstahl, verwendet.

Die Stromdichte soll bei dem erfindungsgemäßen Verfahren zweckmäßig 0,5 bis 2,0 A.dm$^{-2}$ betragen. Innerhalb dieses Bereiches verläuft die Bildung des vierwertigen Zinns optimal. Jedoch ist es auch möglich, mit höheren Stromdichten zu arbeiten. Die Elektrodenspannung beträgt etwa 10 Volt.

Das Dotierungselement kann, falls es sich um ein Metall handelt, welches mit Zinn legierbar ist, in das Reaktionsgemisch über die als Anode verwendete Legierung eingebracht werden. Im allgemeinen ist es aber bevorzugt, das Dotierungsmittel in der gewünschten Menge der in der ersten Stufe erhaltenen Lösung des Zinn-IV-Oxalates und/oder der Oxalate der polymeren Zinn-IV-Verbindungen zuzusetzen. Als Dotierungsmittel besonders geeignet sind die Alkali-, Ammonium- oder Erdalkalifluoride sowie Zinn-II-Fluorid und Fluorwasserstoff.

Die Überführung des in der ersten Stufe gewonnenen Zinnoxalates und/oder der Oxalate der polymeren Zinn-IV-Verbindungen in das gewünschte dotierte Zinn-IV-Oxid kann auf verschiedene Weise erfolgen.

So ist es möglich, die erhaltene wäßrige Lösung des Zinn-IV-Oxalates und/oder der Oxalate der polymeren Zinn-IV-Verbindungen, welche das Dotierungsmittel enthält, mittels eines Sprühtrockners vom Wasser zu befreien und das erhaltene Produkt vorzugsweise bei Temperaturen von 200 bis 500°C zu calcinieren. Eine Überschreitung dieser Temperatur hat zur Folge, daß das gebildete Zinn-IV-Oxid ganz oder anteilig in kristalliner Form anfällt, die anwendungstechnisch aber unerwünscht ist.

Bevorzugt erfolgt die Aufarbeitung der in der ersten Stufe erhaltenen und das Dotierungsmittel enthaltenden Lösung des Zinn-IV-Oxalates und/oder der Oxalate polymerer Zinn-IV-Verbindungen dadurch, daß man in der zweiten Verfahrensstufe das Zinn-IV-Oxalat und/oder die Oxalate polymerer Zinn-IV-Verbindungen durch Zugabe von Ammoniumhydroxid- oder Ammoniumhydrogenkarbonat-Lösung in, bezogen auf Oxalat, mindestens äquivalenten Mengen ausfällt, die wäßrige Dispersion des ausgefallenen Zinnoxidhydrats trocknet und anschließend bei Temperaturen von 200 bis 500°C in das Oxid überführt. Dabei wird in dem Gemenge zunächst Ammoniumoxalat zersetzt, wobei das Gemenge hierdurch aufgelockert und vor Agglomeration geschützt wird. Nach erfolgter Zersetzung des Ammoniumoxalates bildet sich aus dem Oxidhydrat das gewünschte Zinn-IV-Oxid in einer sehr feinteiligen, amorphen Form, die anwendungstechnisch besonders vorteilhaft ist.

Eine weitere bevorzugte Ausführungsform des erfindungsgemäßen Verfahrens ist dadurch gekennzeichnet, daß man in der zweiten Verfahrensstufe das Zinn-IV-Oxalat und/oder die Oxalate polymerer Zinn-IV-Verbindungen durch Zugabe von Natriumhydroxid- oder Natriumkarbonat-Lösung in, bezogen auf Oxalat, mindestens äquivalenten Mengen ausfällt, aus dem Niederschlag die Alkalisalze auswäscht, das Zinnoxidhydrat trocknet und anschließend bei Temperaturen von 200 bis 500°C in das Oxid überführt.

Zur Vermeidung der Bildung von vergröberten Teilchen, die zum Beispiel bei der Trocknung des Zinnoxidhydrates durch Agglomeration erfolgen kann, ist es vorteilhaft, das Zinnoxidhydrat schonend durch Gefriertrocknung oder durch Vakuumtrocknung bei einem Druck von $\leqq$ 10 mbar und Temperaturen $\leqq$ 100°C zu trocknen.

Das erfindungsgemäß erhaltene feinteilige dotierte Zinn-IV-Oxid eignet sich in hervorragender Weise als Füllstoff oder Pigment in Kunststoffen, Lacken, Farben, Papier, Textilien und Tonern.

Das erfindungsgemäße Verfahren soll durch die folgenden Beispiele noch näher erläutert werden. Es sollen außerdem die überlegenen Eigenschaften des erfindungsgemäß erhaltenen Produktes gezeigt werden.

1. Versuchsanordnung

Als Elektrolysezelle dient ein 10-l-Becherglas mit einer 0,8-l-Kunststoffinnenzelle, welche zwei gegenüberliegende Öffnungen mit einer Vorrichtung zum dichten Einbau des Ionenleitermaterials von je 0,5 dm² Fläche versehen ist. In der Innenzelle ist das Kathodenblech parallel zwischen den beiden Öffnungen angeordnet. Innerhalb des Becherglases sind außen vor den Öffnungen der Innenzelle zwei Anodenbleche angeordnet.

2. Versuchsdurchführung

Beispiel 1

1. Stufe

| | |
|---|---|
| Anode: | gegossenes Zinnblech |
| Anolyt: | 2055 g Oxalsäuredihydrat in 4 l Wasser |
| Anolytbewegung: | Durchperlen von Luft |
| Ionenleiter: | Kationenaustauschermembran, im Handel unter der Bezeichnung Nafion 417 erhältlich |
| Kathode: | Chromnickelstahl 18/10 |
| Katholyt: | 50 g Oxalsäuredihydrat in 0,5 l Wasser |
| Katholytbewegung: | durch Wasserstoffentwicklung gegeben |
| Spannung: | $\approx$ 9 Volt |
| Stromstärke: | 4 A |

Im Verlauf der Elektrolyse kommt es zu einer leichten Erwärmung des Elektrolyten auf ca. 30°C. Die Wasserverluste durch die elektrolytische Zersetzung und die Verdampfung werden durch regelmäßige Wasserzugabe ausgeglichen. Nach einem Stromdurchgang von 2441 Ah enthält der Anolyt 295 g/l vierwertiges Zinn.

2. Stufe

1 l des Anolyten wird mit 56,4 g Zinn-II-fluorid versetzt und bei 80°C 1 Stunde intensiv gerührt. Anschließend tropft man zu der auf Raumtemperatur abgekühlten Lösung eine gesättigte Ammoniumbikarbonat-Lösung. Hierbei wird durch Verwendung eines Hochgeschwindigkeitsrührers (Typ Ultra-Turrax) eine Agglomeration der Fällung vermieden. Bei Erreichen eines pH-Wertes von 5,5 wird die Zugabe der Ammoniumbikarbonat-Lösung beendet. Die erhaltene Suspension wird sprühgetrocknet, das resultierende Pulver 30 Minuten im Muffelofen bei 450°C calciniert.

Man erhält ein hochfeines leitfähiges Zinn-IV-Oxid mit einem spezifischen Widerstand von 6 $\Omega$m (gemessen an lose geschüttetem Pulver) und einer spezifischen Oberfläche von 81 m²/g.

Beispiel 2

1. Stufe

| | |
|---|---|
| Anode: | gegossenes Zinnblech |
| Anolyt: | es wird der in Beispiel 1 erhaltene Anolyt verwendet und mit Wasser im Verhältnis 1 : 1 verdünnt |
| Anolytbewegung: | Durchperlen von Luft |
| Ionenleiter: | Kationenaustauschermembran, im Handel unter der Bezeichnung Nafion 417 erhältlich |
| Kathode: | Chromnickelstahl 18/10 |
| Katholyt: | 50 g Oxalsäuredihydrat in 0,5 l Wasser |
| Katholytbewegung: | durch Wasserstoffentwicklung gegeben |
| Spannung: | $\approx$ 9 bis 16 Volt |
| Stromstärke: | 4 A |

Im Verlauf der Elektrolyse kommt es zu einer leichten Erwärmung des Elektrolyten auf 35°C. Die Wasserverluste durch die elektrolytische Zersetzung und die Verdampfung werden durch regelmäßige Wasserzugabe ausgeglichen. Bei konstanter Stromstärke von 4 A steigt die Spannung auf 16 V. Nach einem Stromdurchgang von 2172 Ah steigt der Zinngehalt des Anolyten von 147,5 g auf 300 g/l vierwertiges Zinn.

2. Stufe

1 l der erhaltenen Lösung wird mit 36 g einer 40 gew.-%igen Flußsäure versetzt und 2 Stunden bei 60°C gerührt. Die Lösung wird sprühgetrocknet und das erhaltene Pulver bei 500°C calciniert. Das erhaltene Pulver weist bei einer spezifischen Oberfläche von 84 $m^2$/g einen spezifischen Widerstand von 8 $\Omega$m auf.

Beispiel 3

1. Stufe

| | |
|---|---|
| Anode: | gegossenes Zinnblech |
| Anolyt: | es wird der in Beispiel 1 erhaltene Anolyt verwendet und mit Wasser im Verhältnis 1 : 1 verdünnt |
| Anolytbewegung: | Durchperlen von Luft |
| Ionenleiter: | Kationenaustauschermembran, im Handel unter der Bezeichnung Nafion 417 erhältlich |
| Kathode: | Chromnickelstahl 18/10 |
| Katholyt: | 50 g Oxalsäuredihydrat in 0,5 l Wasser |
| Katholytbewegung: | durch Wasserstoffentwicklung gegeben |
| Spannung: | ≈ 9 bis 24 Volt |
| Stromstärke: | 4 A |

Im Verlauf der Elektrolyse kommt es zu einer leichten Erwärmung des Elektrolyten auf 35°C. Die Wasserverluste durch die elektrolytische Zersetzung und die Verdampfung werden durch regelmäßige Wasserzugabe ausgeglichen. Bei konstanter Stromstärke von 4 A steigt die Spannung auf ≈ 24 V. Nach einem Stromdurchgang von 2629 Ah steigt der Zinngehalt des Anolyten von 147,5 g auf 430 g/l vierwertiges Zinn. Die Restmenge an Oxalsäure beträgt 24 g/l.

2. Stufe

Es wird wie in Beispiel 2, Stufe 2, verfahren. Die Calcinierung erfolgt bei 300°C. Nach 1 Stunde erhält man ein Pulver mit 129 $m^2$/g spezifischer Oberfläche und einer Leitfähigkeit von 17 $\Omega$m.

Beispiel 4

1. Stufe

Es wird wie in Beispiel 1, Stufe 1, verfahren.

2. Stufe

1 l der erhaltenen Lösung wird mit 71,5 g Zinn-II-fluorid versetzt und intensiv gerührt. Diese Lösung wird mit 5 l vollentsalztem Wasser verdünnt und auf 80°C erwärmt. Die warme dotierte Zinn-IV-haltige Lösung wird nun in eine ebenfalls 80°C warme 2 molare Natriumhydroxid-Lösung getropft bis die Lösung einen pH-Wert ≦ 8 erreicht.

Der Niederschlag wird abfiltriert und mit fluoridhaltigem Wasser gewaschen. Nachträglich erfolgt die Trocknung im Vakuumtrockenschrank bei einer Temperatur von ≦ 40°C und einem Vakuum < 1 mbar. Das getrocknete Produkt wird mechanisch zerkleinert und bei 400°C 45 Minuten getempert.

Das resultierende Pulver ist sehr hell und weist einen spezifischen Widerstand von 18 $\Omega$m und eine spezifische Oberfläche von 87 $m^2$/g auf.

Beispiel 5

1. Stufe

Es wird wie in Beispiel 1, Stufe 1, verfahren.

2. Stufe

1 l der erhaltenen Lösung wird mit 71,5 g Zinn-II-fluorid versetzt und intensiv gerührt. Diese Lösung wird mit 5 l vollentsalztem Wasser verdünnt und auf 80°C erwärmt. Die warme dotierte Zinn-IV-haltige Lösung wird nun in eine ebenfalls 80°C warme 2 molare Natriumkarbonat-Lösung getropft bis die Lösung einen pH-Wert $\leqq$ 8 erreicht.

Danach wird der Filterrückstand gefriergetrocknet. Diese Gefriertrocknung erfolgt in fünf Schritten, die der nachfolgenden Tabelle zu entnehmen sind:

| | | Trocknungsschritte | | | | |
| --- | --- | --- | --- | --- | --- | --- |
| | | 1 | 2 | 3 | 4 | 5 |
| Starttemperatur * | °C | -20 | -20 | +20 | +40 | +50 |
| Endtemperatur * | °C | -20 | +20 | +40 | +50 | +50 |
| Laufzeit | min | 30 | 120 | 120 | 120 | 120 |
| Vakuum | mbar | 0,5 | 0,5 | 0,5 | 0,5 | 0,1 |

* Produkttemperatur über Thermoelement gemessen

Der Rückstand wird auf eine Ausgangstemperatur von -20°C schnell abgekühlt und danach langsam unter Vakuum auf eine Endtemperatur von ca. 50°C gebracht. Das getrocknete Produkt wird mechanisch zerkleinert und bei 400°C 45 Minuten getempert.

Das resultierende Pulver ist sehr hell und weist einen spezifischen Widerstand von 15 $\Omega$m und eine spezifische Oberfläche von 92 m²/g auf.

**Patentansprüche**

1. Verfahren zur Herstellung von feinteiligem, elektrisch leitfähigem Zinn-IV-Oxid, wobei in einer ersten Stufe eine wäßrige Lösung von Zinn-IV-Oxalat und/oder Oxalaten polymerer Zinn-IV-Verbindungen hergestellt wird, aus der in einer zweiten Stufe das gewünschte Zinn-IV-Oxid durch Calcination erhalten wird, dadurch gekennzeichnet, daß in der ersten Stufe das Zinn-IV-Oxalat und/oder die Oxalate polymerer Zinn-IV-Verbindungen durch Elektrolyse gewonnen wird, wobei

   a) die Anode aus Zinn oder einer Zinnlegierung, welche ein Dotierungsmetall enthält, besteht,
   b) die Kathode aus einem Metall oder Graphit besteht,
   c) beide Elektroden durch ein Diaphragma oder eine H$^+$-Ionen durchlässige organische Membran voneinander getrennt sind, und
   d) als Elektrolyt eine wäßrige Oxalsäurelösung verwendet wird,

   und wobei man in der zweiten Stufe aus der erhaltenen Lösung des Zinn-IV-Oxalates und/oder der Oxalate polymerer Zinn-IV-Verbindungen, der an sich bekannte Dotierungsmittel in üblichen Mengen zugesetzt werden, das Zinn-IV-Oxid durch Calcinieren des Oxalates herstellt.

2. Verfahren nach Anspruch 1, dadurch gekennzeichnet, daß als Elektrolyt eine gesättigte wäßrige Oxalsäurelösung verwendet wird, in der überschüssige, ungelöste Oxalsäure enthalten ist.

3. Verfahren nach Anspruch 1 oder 2, dadurch gekennzeichnet, daß man als Anodenmaterial eine Zinn-Antimonlegierung, deren Antimongehalt dem gewünschten Dotierungsgrad des Zinnoxids entspricht, verwendet.

4. Verfahren nach Anspruch 1, dadurch gekennzeichnet, daß man in der zweiten Verfahrensstufe das Zinn-IV-Oxalat und/oder die Oxalate polymerer Zinn-IV-Verbindungen durch Zugabe von Ammoniumhydroxid- oder Ammoniumhydrogenkarbonat-Lösung in, bezogen auf Oxalat, mindestens äquivalenten Mengen ausfällt, die wäßrige Dispersion des ausgefallenen Zinnoxidhydrats trocknet und anschließend bei Temperaturen von 200 bis 500°C in das Oxid überführt.

5. Verfahren nach Anspruch 1, dadurch gekennzeichnet, daß man in der zweiten Verfahrensstufe das Zinn-IV-Oxalat und/oder die Oxalate polymerer Zinn-IV-Verbindungen durch Zugabe von Natriumhydroxid- oder Natriumkarbonat-Lösung in, bezogen auf Oxalat, mindestens äquivalenten Mengen ausfällt, aus dem Niederschlag die Alkalisalze auswäscht, das Zinnoxidhydrat trocknet und anschließend bei Temperaturen von 200 bis 500°C in das Oxid überführt.

6. Verfahren nach Anspruch 4 oder 5, dadurch gekennzeichnet, daß man das Zinnoxidhydrat schonend durch Gefriertrocknung oder durch Vakuumtrocknung bei einem Druck von $\leqq$ 10 mbar und Temperaturen $\leqq$ 100°C trocknet.

7. Verfahren nach Anspruch 1, dadurch gekennzeichnet, daß man in der zweiten Verfahrensstufe der wäßrigen Lösung als Dotierungsmittel ein anorganisches Fluorid zusetzt.

## Claims

1. Process for the preparation of finely divided, electroconductive tin(IV) oxide, in which, in a first step, an aqueous solution of tin(IV) oxalate and/or oxalates of polymeric tin(IV) compounds is prepared, from which, in a second step, the desired tin(IV) oxide is obtained by calcination, characterized in that, in the first step, the tin(IV) oxalate and/or the oxalates of polymeric tin(IV) compounds is (are) obtained by electrolysis, where
   a) the anode comprises tin or a tin alloy containing a dopant metal,
   b) the cathode comprises a metal or graphite,
   c) the two electrodes are separated from one another by a diaphragm or an $H^+$ ion-permeable organic membrane, and
   d) the electrolyte used is an aqueous oxide acid solution,
   and where, in the second step, the oxalate in the resultant solution of the tin(IV) oxalate and/or the oxalates of polymeric tin(IV) compounds containing conventional dopants in conventional amounts is calcined to give the tin(IV) oxide.

2. Process according to Claim 1, characterized in that the electrolyte used is a saturated aqueous oxalic acid solution containing excess undissolved oxalic acid.

3. Process according to Claim 1 or 2, characterized in that the anode material used is a tin/antimony alloy whose antimony content corresponds to the desired degree of doping of the tin oxide.

4. Process according to Claim 1, characterized in that, in the second process step, the tin(IV) oxalate and/or the oxalates of polymeric tin(IV) compounds is (are) precipitated by addition of ammonium hydroxide or ammonium hydrogencarbonate solution in, based on oxalate, at least equivalent amounts, and the aqueous dispersion of the precipitated tin oxide hydrate is dried and subsequently converted into the oxide at temperatures of from 200 to 500°C.

5. Process according to Claim 1, characterized in that, in the second process step, the tin(IV) oxalate and/or the oxalates of polymeric tin(IV) compounds is (are) precipitated by addition of sodium hydroxide or sodium carbonate solution in, based on oxalate, at least equivalent amounts, the alkali metal salts are washed out of the precipitate, and the tin oxide hydrate is dried and subsequently converted into the oxide at temperatures of from 200 to 500°C.

**6.** Process according to Claim 4 or 5, characterized in that the tin oxide hydrate is dried under gentle conditions by freeze drying or by vacuum drying at a pressure of $\leqq$ 10 mbar and temperatures $\leqq$ 100°C.

**7.** Process according to Claim 1, characterized in that, in the second process step, an inorganic fluoride is added as dopant to the aqueous solution.


**Revendications**

**1.** Procédé de préparation d'oxyde d'étain IV électroconducteur finement divisé, dans lequel, lors d'une première étape, on prépare une solution aqueuse d'oxalate d'étain IV et/ou d'oxalates de composés polymères d'étain IV, à partir de laquelle on obtient, lors d'une deuxième étape, l'oxyde d'étain IV souhaité, par calcination, caractérisé en ce que, lors de la première étape, l'oxalate d'étain IV et/ou les oxalates de composés polymères d'étain IV sont obtenus par électrolyse, procédé dans lequel :

a) l'anode est constituée d'étain ou d'un alliage d'étain qui contient un métal de dopage,

b) la cathode est constituée d'un métal ou de graphite,

c) les deux électrodes sont séparées l'une de l'autre par un diaphragme ou une membrane organique qui laisse passer les ions H$^+$, et

d) on utilise une solution aqueuse d'acide oxalique comme électrolyte,

et, lors de la deuxième étape, à partir de la solution obtenue d'oxalate d'étain IV et/ou d'oxalates de composés polymères d'étain IV, auxquels on ajoute des quantités usuelles d'agents de dopage connus en soi, on prépare l'oxyde d'étain IV par calcination de l'oxalate.

**2.** Procédé selon la revendication 1, caractérisé en ce qu'on utilise, comme électrolyte, une solution aqueuse saturée d'acide oxalique, qui contient de l'acide oxalique non dissous en excès.

**3.** Procédé selon la revendication 1 ou 2, caractérisé en ce qu'on utilise, comme matériau anodique, un alliage d'étain et d'antimoine, dont la teneur en antimoine correspond au degré souhaité de dopage pour l'oxyde d'étain.

**4.** Procédé selon la revendication 1, caractérisé en ce que, lors de la deuxième étape de procédé, on fait précipiter l'oxalate d'étain IV et/ou les oxalates de composés polymères d'étain IV grâce à l'addition d'une solution d'hydroxyde d'ammonium ou d'hydrogénocarbonate d'ammonium en des quantités au moins équivalentes par rapport à l'oxalate, on assèche la dispersion aqueuse d'oxyde d'étain hydraté précipité et ensuite, on transforme celui-ci en l'oxyde, à des températures situées entre 200 et 500°C.

**5.** Procédé selon la revendication 1, caractérisé en ce que, lors de la deuxième étape de procédé, on fait précipiter l'oxalate d'étain IV et/ou les oxalates de composés polymères d'étain IV grâce à l'addition d'une solution d'hydroxyde de sodium ou de carbonate de sodium en des quantités au moins équivalentes par rapport à l'oxalate, on débarrasse le précipité de ses sels alcalins, par lavage, on fait sécher l'oxyde d'étain hydraté et ensuite, on le transforme en l'oxyde, à des températures situées entre 200 et 500°C.

**6.** Procédé selon la revendication 4 ou 5, caractérisé en ce qu'on fait sécher l'oxyde d'étain hydraté, avec ménagement, par lyophilisation ou par séchage sous vide, à une pression de $\leqq$ 10 mbar et à des températures de $\leqq$ 100°C.

**7.** Procédé selon la revendication 1, caractérisé en ce qu'on ajoute un fluorure inorganique, comme agent de dopage, à la solution aqueuse, lors de la deuxième étape de procédé.